# EUROPEAN PATENT APPLICATION

(11) **EP 3 971 269 A1**
(43) Date of publication of application: **23.03.2022**
(21) Application number: 20732997.0
(22) Date of filing: 18.05.2020
(51) Int. Cl.: C11D 1/04, C11D 9/10, C11D 9/22, C11D 9/42, C11D 17/04

(54) **WASHING COMPOSITION**

(30) Priority: 16.05.2019 ES 201930433
(71) Applicant: Herrero Sánchez, Sandra, 46530 Puçol, Valencia (ES)
(72) Inventor: Herrero Sánchez, Sandra, 46530 Puçol, Valencia (ES)
(74) Representative: Pardo Zapata, José
(86) International application number: PCT/ES2020/070317
(87) International publication number: WO 2020/229719

(57) **Abstract**

The present invention relates to a composition comprising a combination of at least one catalyzing phase A comprising a biopolymer matrix impregnated with an aqueous solution of a transition metal salt, one phase B comprising a peroxide, and one phase C comprising soap; wherein phase A is physically separated from phase B. The present invention also relates to a capsule comprising two or three compartments made of a water-soluble film, and wherein said compartments together form said capsule, characterized in that it contains the composition of the invention, wherein the catalyzing phase A is physically separated from phase B. Other aspects of the invention relate to a method for preparing the composition of the invention, to a method for preparing the capsule of the invention, and to a method for cleaning clothing which comprises treating the clothing to be cleaned with the composition or the capsule of the invention. Finally, the present invention relates to the use of the composition or the capsule of the invention as a detergent for clothing.

## Description

### Field of the Invention

The present invention relates to a composition for washing textiles, particularly a composition for removing molecules associated with bad odors in textiles, more particularly for removing said molecules from sports apparel.

### Background

The continuous use of items of clothing for long periods of time in contaminated environments with a high concentration of certain suspended particles or during intense physical activity causes the adhesion of specific molecules accountable for bad odors to the textile.

Document US6140294 discloses a bleaching detergent composition comprising a metal complex as an oxidation catalyst, where the metal may be manganese, with a coordinating species and a pentadentate ligand.

Document US4626373 relates to a detergent comprising a manganese catalyst with bleaching action, comprising a Mn(II) cation bound to a ligand in a protective matrix, a peroxide, and a surfactant, wherein the manganese complex is preferably formed with pyrophosphate or starch.

However, users often have difficulties in removing unwanted bad odors from their clothing using conventional detergents even by washing at a high temperature, particularly in sportswear where skin bacteria accumulate and which is furthermore impregnated with sweat. Therefore, a detergent composition capable of easily removing the bad odor impregnated in clothing made of cotton, acrylic fibers, or other materials is necessary.

The composition of the present invention aims to overcome said drawbacks, favoring the cleaning and removal of persistent bad odors that cannot be easily removed using conventional detergents.

### Brief Description of the Invention

The inventors have surprisingly discovered that the combination in a composition of a catalyzing phase A comprising a polymer matrix impregnated with an aqueous solution of a transition metal salt, a phase B comprising a peroxide, and a phase C comprising soap, wherein the catalyzing phase A is physically separated from phase B, allows effectively removing bad odors impregnated in textile fibers, particularly bad odors impregnated in sports apparel. Furthermore, the composition of the present invention successfully removes unwanted odors even at a low washing temperature, a feature which is desirable given that some textiles readily deteriorate if they are subjected to washing cycles at temperatures above 40°C. Specifically, the effectiveness thereof at room temperature has been demonstrated.

In a first aspect, the invention relates to a composition comprising a combination of at least one catalyzing phase A comprising a biopolymer matrix impregnated with an aqueous solution of a transition metal salt, one phase B comprising a peroxide, and one phase C comprising soap; wherein the catalyzing phase A is physically separated from phase B.

In a second aspect, the invention relates to a capsule comprising two or three compartments, wherein said compartments are made of a water-soluble film and wherein the compartments together form said capsule; characterized in that said capsule contains the composition according to the first aspect, wherein the catalyzing phase A is physically separated from phase B.

The invention also relates to a method for preparing a composition according to the first aspect, comprising the steps of (a) preparing a catalyzing phase A which comprises preparing an aqueous solution of a transition metal salt, preferably manganese sulfate, preparing an aqueous suspension of a biopolymer matrix, preferably a chitosan matrix, stirring the aqueous suspension of the biopolymer matrix at a temperature of at least 50°C and adding the aqueous solution of the transition metal salt, and maintaining stirring and a temperature of at least 50% until the water evaporates; (b) providing a phase B comprising a peroxide, preferably sodium percarbonate; (c) providing a phase C comprising soap, and (d) combining the three phases, providing that the catalyzing phase A does not interact with phase B.

Another aspect of the invention relates to a method for preparing the capsule according to the second aspect of the invention, comprising the steps of (a) providing two or three compartments made of a water-soluble film, (b) introducing two phases A, B, and C in the compartments, wherein the catalyzing phase A does not interact physically with phase B, and (c) attaching the compartments to form the capsule.

Another aspect of the invention relates to the method for cleaning clothing which comprises treating the clothing to be cleaned with the composition as defined in the first inventive aspect or with the capsule as defined in the second inventive aspect.

A final aspect of the invention relates to the use of the composition according to the first aspect of the capsule of the second inventive aspect as a detergent for clothing.

### Brief Description of the Figures

The figures accompanying the present description illustrate aspects of the present invention and serve to explain, together with the specification, the principles of the invention in greater detail and to allow a person skilled in the art to put into practice and use the present invention.

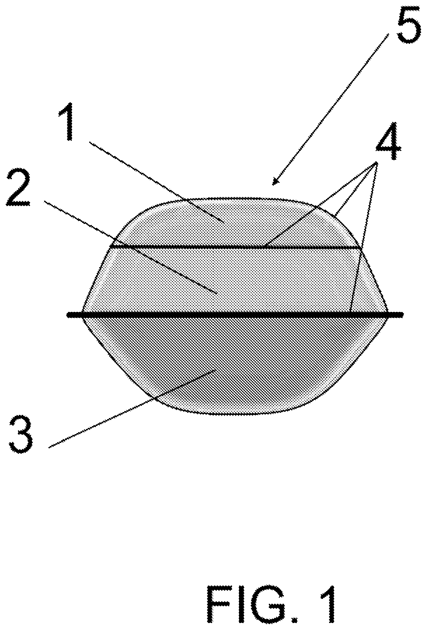

Figure 1 shows a perspective view of the capsule made according to the object of the present invention, wherein the capsule (5) is preferably formed by two or three compartments separated by a water-soluble film (4), wherein each compartment independently stores each of the three phases: the phase comprising the catalyst (1), the phase comprising sodium percarbonate (2), and the phase comprising soap (3).

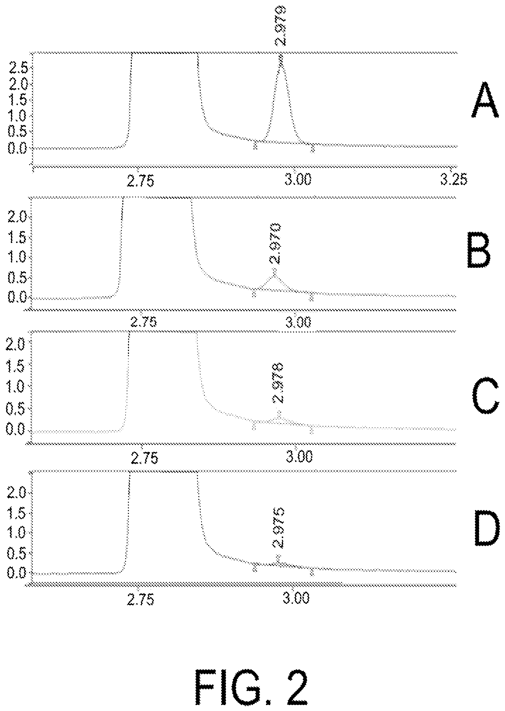

Figure 2 shows the depiction of the curves obtained by gas chromatography - mass spectrometry at four different times (curves A, B, C, and D) after contacting the composition of the invention with the compound accountable for the bad odor to be removed dissolved in water.

The embodiments of the present invention will be described below in reference to the figures included in the specification.

### Detailed Description of the Invention

The composition of the present invention comprises a combination of at least three phases: a catalyzing phase A comprising a biopolymer matrix impregnated with an aqueous solution of a transition metal salt, a phase B comprising a peroxide, and a phase C comprising soap; wherein the catalyzing phase A is physically separated from phase B. When contacting the catalyzing phase A with phase B comprising a peroxide, a large amount of active oxygen, capable of transforming the molecules by means of oxidation, is released. Therefore, the composition disclosed in the present document is capable of oxidizing molecules associated with bad odors caused by different types of stains, sweat, bacteria, smoke, or suspended particles, and other sources that may cause said bad odors. Particularly, the composition of the present invention is capable of removing bad odors caused by excessive sweating, due to the presence of the thioalcohol "3-methyl-3-sulfanylhexan-1-ol" accountable for the bad odor and produced by skin bacteria from the genus *Staphylococcus* and *Corynebacterium* by means of biotransformation, particularly S-[1-(2-hydroxyethyl)-1-methylbutyl]-(L)-cysteinylglycine, also referred to as S-Cys-Gly-3M3SH.

In a first aspect, the invention relates to a composition comprising a combination of at least: a) one catalyzing phase A comprising a biopolymer matrix impregnated with an aqueous solution of a transition metal salt, b) one phase B comprising a peroxide, and c) one phase C comprising soap; wherein the catalyzing phase A is physically separated from phase B.

In one embodiment, the composition as defined above is a detergent composition.

The expression "catalyzing phase" in the present invention refers to a phase which is capable of triggering or accelerating a chemical reaction by means of a catalyst. As disclosed in the first aspect of the invention, the catalyzing phase A comprises a biopolymer matrix which is impregnated with an aqueous solution of a transition metal salt, wherein said transition metal salt is the catalyst.

In the present invention, the expression "biopolymer matrix" refers to a continuous, three-dimensional structure formed by a biopolymer the functional groups of which form a complex with and stabilize metal ions, particularly a transition metal ion, and more specifically Mn²⁺ ion, keeping its catalytic activity sustained over time.

The term "biopolymer" as it is used herein refers to a type of polymer which is produced by a living organism in nature. Alternatively, it can also be referred to as a polymeric biomolecule.

Non-limiting examples of biopolymers are proteins, polysaccharides, or nucleic acids; particularly silk, rubber, cellulose, or chitin; more specifically chitosan, gelatins, carrageenan, and gellan gum, or mixtures thereof.

In a preferred embodiment, the biopolymer matrix is formed by a biopolymer selected from chitosan, gelatins, carrageenan, gellan gum, and mixtures thereof, preferably chitosan.

Chitosan [poly-β-(1,4)-2-amino-2-deoxy-D-glucose] is a biopolymer, particularly an amino polysaccharide found abundantly in nature, which is produced from chitin deacetylation. Generally, it is obtained from small crustaceans and insects. The main characteristic is its degree of acetylation, so it is capable of forming a continuous structure or matrix, and its molecular weight. Due to the presence of amino groups, it is capable of creating bonds with positively charged molecules.

In a preferred embodiment, chitosan is used in solid state, preferably as a powder.

In the present invention, the term "impregnate" is defined as contacting specific particles or molecules in a structure, being fixed by chemical interactions.

In the present invention, "transition metal salt" is a term referring to a chemical compound consisting of a cluster of cations and anions which interact by means of ionic or electrostatic forces, wherein cations are positively charged ions of the transition metal. The term "transition metal" refers to an element from block "d" of the periodic table, whose electron configuration of the "d" orbital is incomplete or may give rise to cations.

The term peroxide referred to herein refers to a peroxide or a peroxide adduct. A peroxide is an [O-O]²⁻ group, also referred to as "peroxo" group. The term adduct refers to an AB chemical species, wherein each molecular entity is formed by direct combination of two molecular entities A and B, such that there is a change in connectivity but not a loss of atoms in entities A and B. Therefore, a peroxide adduct in the present invention refers to a chemical species formed by two or more molecular entities, wherein one of the molecular entities contains a peroxide group.

In another preferred embodiment, the transition metal salt of the catalyzing phase A comprising a biopolymer matrix impregnated with an aqueous solution of a transition metal salt is a manganese salt, preferably the salt is manganese sulfate.

Another preferred embodiment of the invention relates to the composition defined above comprising one which comprises a peroxide in phase B selected from percarbonate, perborate, peroxypyrophosphates, citrate perhydrates, peroxophthalates, diperazelaic acid, phthaloimino peracid, and diperdodecanedioic acid, preferably percarbonate.

Sodium percarbonate is a sodium carbonate (Na₂CO₃) and hydrogen peroxide (H₂O₂) adduct, the chemical formula of which is 2Na₂CO₃·3H₂O₂, and it is a solid at room temperature.

The expression "room temperature" in the present invention is defined as a comfortable temperature, typical of the inside of a room, in a range between 18 and 30°C depending on the region and time of the year. However, in a scientific context, it is generally between 21 and 25°C (294.15 and 298.15 K). Specifically, the room temperature value accepted in scientific literature corresponds to 25°C (298.15K).

In a preferred embodiment, the peroxide of phase B is in solid state.

In one embodiment, the composition defined above comprises a biopolymer chitosan matrix impregnated with an aqueous solution of a transition metal salt, wherein the transition metal salt is manganese sulfate, and wherein the peroxide is sodium percarbonate.

In a preferred embodiment, all the phases of the composition as defined above, comprising a combination of at least one catalyzing phase A comprising a biopolymer matrix impregnated with an aqueous solution of a transition metal salt, one phase B comprising a peroxide, and one phase C comprising soap, wherein the catalyzing phase A is physically separated from phase B, are solid.

The composition defined above comprises a phase C comprising soap.

In a preferred embodiment, the soap of phase C is a soap in solid state.

The term "soap" refers to a salt, generally a sodium or potassium salt, resulting from the chemical reaction of saponification between an alkali (sodium or potassium hydroxide) and a lipid. Non-limiting examples of soaps include neutral soap, for example Marseille-type soap, tar soap, oil soap, and glycerin soap.

In a preferred embodiment, the soap is a neutral soap, preferably Marseille soap.

In the present invention, the term "neutral soap" refers to a soap the pH of which is similar to the pH of the surface of healthy human skin. The pH value of human skin, normally measured on the surface of the inner face of the forearm, is moderately acidic and is generally comprised between 4.5 and 5.5. Therefore, the expression "neutral soap" in the present invention refers to a soap the pH of which is in a range comprised between 4.5 and 5.5.

In the present invention, the expression "Marseille soap" refers to a soap which is manufactured by means of a conventional process, produced originally in the area of Marseille, France, from a mixture of vegetable oils, salt water from the Mediterranean sea, and alkaline ash. Preferably, the vegetable oil is olive oil. Preferably, the alkaline ash originates from solid waste resulting from plant combustion.

In one embodiment, the composition defined above comprises a phase A wherein the transition metal salt is manganese sulfate, a phase B wherein the peroxide is a peroxide in solid state, and a phase C wherein the soap is Marseille soap, and wherein each of phases A, B, and C are physically separated from one another.

In a preferred embodiment, in the composition defined above all the phases are solid.

In another embodiment, the composition defined above comprises between 2% and 6% of catalyzing phase A, between 2% and 9% of phase B, and between 85% and 96% of a phase C. More preferably, the composition comprises between 3% and 5% of catalyzing phase A, between 4% and 6% of phase B, and between 89% and 93% of phase C.

In the composition of the invention, the catalyzing phase A is physically separated from phase B. In a preferred embodiment, the catalyzing phase A is physically separated from phase B and phase C. In an even more preferred embodiment, each of phases A, B, and C are physically separated from one another.

In a second aspect, the invention relates to a capsule comprising two or three compartments, wherein said compartments are made of a water-soluble film (4) and wherein the compartments together form the capsule, characterized in that said capsule contains the composition defined above, wherein the catalyzing phase A is physically separated from phase B.

The term "capsule" in the present invention refers to a casing which covers, protects, and physically separates an element, part, or compound that is "encapsulated".

The term "compartment" used herein refers to each of the partitions or sections into which a space is physically divided.

The term "film" in the present invention refers to a thin layer forming a coating.

The term "water-soluble" in the present invention refers to the capacity of dissolving in the presence of water, forming a solution.

Particularly, the capsule of the present invention comprises two or three compartments made of a water-soluble film. Some non-limiting examples of water-soluble materials which can form thin water-soluble films or sheets suitable for separating the components of the detergent composition of the present invention are polyvinyl alcohol (PVA/PVAL/POVH) or mixtures of polylactic acid with starch.

The water-soluble film described herein has a water solubility of at least 50%, preferably at least 75%, even more preferably 95%.

The water-soluble material of the water-soluble film can be obtained and processed by means of any suitable technique of the state of the art, known by one skilled in the art, such as melting, blow molding, extrusion, or blow extrusion, for example.

One skilled in the art who wants to manufacture the capsule described herein can use any of the methods suited to that end, known in the state of the art, to obtain a capsule comprising two or three compartments made of a water-soluble film, and attached to one another to form said capsule. For example, document EP3415591 describes how to obtain a capsule comprising several compartments made of a water-soluble film.

In a preferred embodiment, the capsule defined above comprises two compartments, wherein said compartments are made of a water-soluble film (4) and wherein the compartments together form said capsule; characterized in that said capsule contains the detergent composition defined above, and wherein the catalyzing phase A is physically separated from phase B.

In a preferred embodiment, the capsule defined above comprises two compartments, wherein said compartments are made of a water-soluble film (4) and wherein the compartments together form said capsule; characterized in that said capsule contains the detergent composition defined above, and wherein the catalyzing phase A is physically separated from phase B and phase C.

In another preferred embodiment, the capsule defined above comprises three compartments, wherein said compartments are made of a water-soluble film (4) and wherein the compartments together form said capsule; characterized in that said capsule contains the detergent composition defined above, wherein the catalyzing phase A is physically separated from phase B.

In another preferred embodiment, the capsule defined above comprises three compartments, wherein said compartments are made of a water-soluble film (4) and wherein the compartments together form said capsule; characterized in that said capsule contains the detergent composition defined above, and wherein the catalyzing phase A is physically separated from phase B and phase C.

In another even more preferred embodiment, the capsule defined above comprises three compartments, wherein said compartments are made of a water-soluble film (4) and wherein the compartments together form said capsule; characterized in that said capsule contains the detergent composition defined above, wherein each of the three phases A (1), B (2), and C (3) is located in a different compartment of the capsule (5). This separation allows the peroxide to contact the catalyst in the presence of the fabric to be cleaned during the washing process, optimizing the amount of oxygen generated.

In a particular embodiment, the capsule of the present invention as defined above comprises: from 0.5 g to 1.25 g of catalyzing phase A, from 0.5 g to 2 g of phase B, and from 15 g to 20 g of phase C.

In another particular embodiment, the capsule of the present invention as defined above comprises: from 2% to 6% of catalyzing phase A, from 2% to 9% of phase B, and from 85% to 96% of phase C.

In another particular embodiment, the capsule of the present invention as defined above comprises: from 3% to 5% of catalyzing phase A, from 4% to 6% of phase B, and from 89% to 93% of phase C.

Another aspect of the invention relates to a method for preparing a composition according to the first aspect, comprising the steps of (a) preparing a catalyzing phase A which comprises preparing an aqueous solution of a transition metal salt, preferably manganese sulfate, preparing an aqueous suspension of a biopolymer matrix, preferably a chitosan matrix, stirring the aqueous suspension of the biopolymer matrix at a temperature of at least 50°C and adding the aqueous solution of the transition metal salt, and maintaining stirring and a temperature of at least 50% until the water evaporates; (b) providing a phase B comprising a peroxide, preferably sodium percarbonate; (c) providing a phase C comprising soap; and (d) combining the three phases, providing that the catalyzing phase A does not interact with phase B.

In a preferred embodiment of the preparation method as define above, the aqueous solution of a transition metal salt of step (a) has a transition metal salt concentration from 2% to 10%, even more preferably from 4% to 6%.

In another preferred embodiment of the preparation method as defined above, the aqueous suspension of the biopolymer of step (a) has a biopolymer concentration from 8% to 10%.

In another preferred embodiment of the preparation method as defined above, the stirring of the aqueous biopolymer suspension of step (a) takes place at least at 10 rpm.

Another aspect of the invention relates to a method for preparing the capsule according to the second aspect of the invention, comprising the steps of (a) providing two or three compartments made of a water-soluble film, (b) introducing the phases A, B, and C in the compartments, wherein the catalyzing phase A does not interact physically with phase B, and (c) attaching the compartments to form the capsule.

The attachment of the compartments to form the capsule can be carried out by means of a chemical sealing method with a solvent, preferably sealing with water. Sealing with water is carried out by applying moisture to the films before sealing them to form the sealing areas.

In a preferred embodiment of the method for preparing the capsule as defined above, each phase A, B, and C is introduced in a different compartment of said capsule.

Another aspect of the invention relates to a method for cleaning clothing which comprises treating the clothing to be cleaned with the composition as defined in the first inventive aspect or with the capsule as defined in the second inventive aspect.

The cleaning method defined above can be carried out in a home appliance for washing textiles or manually, known by one skilled in the art as machine washing or hand washing, respectively.

This cleaning method which comprises treating the clothing to be cleaned with the composition of the invention, directly or in the form of a capsule, allows effectively removing bad odors impregnated in the textile fibers, particularly bad odors impregnated in sports apparel. Furthermore, this method successfully removes unwanted odors even at a low washing temperature, a feature which is desirable given that certain textiles readily deteriorate if they are subjected to washing cycles at temperatures above 40°C. Specifically, the effectiveness thereof at room temperature has been demonstrated.

A final aspect of the invention relates to the use of the composition according to the first aspect as a detergent for clothing, preferably as a detergent for sportswear.

The embodiments described in this specification are only representative, non-limiting embodiments. Certain variations, combinations, and modifications are possible and fall within the scope of protection of this disclosure. Accordingly, the scope of protection is not limited by the description, but rather is defined by the claims and includes all the equivalents of the subject-matter of the claims.

### EXAMPLES

### Manufacturing method for the catalyzing phase A

The catalyzing phase of the example is prepared by means of wet impregnation, i.e., contacting the chitosan support with the impregnating solution, i.e., a manganese sulfate solution, for a specific time until the chitosan support is saturated with the solution. After that saturation time, the excess liquid is removed by evaporation to obtain the catalyzing phase A in solid form of the detergent composition of the present invention.

15 mL of distilled water are introduced in a beaker and 40 mg of manganese sulfate (MnSO₄) are added and stirred to complete dissolution.

10 mL of water and 1 g of chitosan are introduced in another beaker under stirring, heated at a temperature of 80°C, and said solution is kept under stirring.

The manganese sulfate solution is added dropwise with a Pasteur pipette to the chitosan solution, keeping stirring constant and the temperature at 80°C.

After completely adding the manganese sulfate solution to the chitosan solution, the temperature is reduced to 60°C and it is kept under gentle stirring until the prepared material is dry.

Once the material is dry, stirring is stopped and it is cooled at room temperature, obtaining a chitosan support completely impregnated with a manganese solution, wherein the manganese is 5% by weight in the final impregnated material.

The prepared samples of the catalyzing phase (chitosan matrix impregnated with a manganese sulfate solution) are reproduced below:

**Table 1. Composition of the samples of catalyzing phase A**

| Sample number | Manganese sulfate | Chitosan concentration |
|---|---|---|
| 1 | 5% in acidic pH (pH= 5-7) | 0.01 g/L |
| 2 | 5% in pH of the washing medium | 0.01 g/L |
| 3 | 5% in pH of the washing medium with ultramarine blue | 0.01 g/L |

### Method for manufacturing the capsule

The capsule as described above can be obtained according to a method which comprises providing 2 or 3 compartments made of a water-soluble film (4), introducing phases A (1), B (2), and C (3) in said compartments, wherein phases A, B, and C are physically separated from and do not interact with one another, and finally attaching the compartments such that together they form said capsule (5).

The attachment of the compartments can be carried out by means of a chemical sealing method with a solvent, preferably sealing with water. Sealing with water is carried out by applying moisture to the films before sealing them to form the sealing areas.

### Catalytic activity test

To verify the catalytic activity of the prepared material (catalyzing phase A) samples, the determination of the active oxygen generated in the reaction upon contact with the soap (phase C) and the peroxide (phase B) in an aqueous medium has been performed.

To that end, an air oxygen meter (Digital Oxygen Meter model DO-5510, MRC Lab) capable of controlling the percentage of oxygen in the environment was used.

The oxygen determination was carried out in a leak-tight atmosphere to prevent the interference of the oxygen present in the air, and for the purpose of obtaining comparable results, so as to verify the catalytic activity of the prepared catalyzing phase A samples.

The parameters used for demonstrating the catalytic capacity of the prepared samples were as follows:
- 500 mL of distilled water.
- 6.25 g of Marseille-type, solid natural soap,
- 0.32 g of sodium carbonate peroxyhydrate,
- 0.25 g of samples 1, 2, and 3 to be analyzed,
- Room temperature and continuous stirring.

The following table shows the measured percentage values of oxygen at room temperature. These values were measured at different times after the reaction of the catalyzing phase with the other two phases, taking the values at t=0, t=1 min, t=10 min, t=20 min, t=30 min, t=40 min, and t=50 min after contacting the three phases.

**Table 2. Progression over time of the percentage values of oxygen at room temperature**

| Sample number | t=0 min | t=1 min | t=10 min | t=20 min | t=30 min | t=40 min | t=50 min |
|---|---|---|---|---|---|---|---|
| **1** | 20.8 | 20.9 | 21.5 | 22.3 | 24.1 | 26.2 | 26.8 |
| **2** | 20.8 | 21.1 | 36.5 | 41.7 | 43.2 | 44.8 | 45.1 |
| **3** | 20.8 | 21 | 32.8 | 40.9 | 42.5 | 44.1 | 44.8 |

Therefore, the preceding experiment demonstrates the catalytic capacity of the prepared samples of the present invention at room temperature. The reproducibility of these tests was verified by means of repeating the experiments.

Finally, the tests for determining the capacity of the prepared samples for destroying bad odors are described in detail. Washing simulation was performed specifically by adding an unwanted odor agent similar to the molecule accountable for the bad odor which impregnates fabrics after sweating. Particularly, 2-methyl-2-propanethiol, the main characteristics of which are its low molecular weight, strong odor, and high water miscibility, was used.

The parameters used for verifying the capacity of one of the prepared samples for destroying bad odors were as follows:
- 500 mL of distilled water,
- 6.25 g of commercial Marseille-type soap,
- 0.32 g of sodium carbonate peroxyhydrate,
- 0.25 g of sample 2,
- 1 mL of 2-methyl-2-propanethiol,
- Room temperature and continuous stirring.

The reaction was analyzed by means of gas chromatography
- mass spectrometry (GC-MS, Varian 3900 gas chromatograph equipped with a 5% phenyl 95% polymethylsiloxane TRB-5MS column, 30 m, 0.25 mm x 0.25 µm, Teknokroma; Agilent mass spectrometer 5973N-6890N).

Figure 2 depicts the curves obtained by means of GC-MS.

Curve A represents the analysis performed at the initial moment of contacting the three phases with compound 2-methyl-2-propanethiol.

Curve B represents the analysis after 15 minutes, curve C represents the analysis after 30 minutes, and curve D represents the result obtained 1 hour after contacting the three phases, with the 2-methyl-2-propanethiol molecule being present.

The X-axis represents the retention time expressed in seconds and the Y-axis represents the signal obtained by means of GC-MS expressed in mV, the signal being related with the abundance of the compound to be measured in the analyzed sample.

The comparison of curves A, B, C, and D of Figure 2 therefore allows observing the peak which indicates the presence of 2-methyl-2-propanethiol, the retention time of which is 2.97 minutes, and which gradually disappears as the reaction times between the detergent composition of the present invention and the agent accountable for the bad odor increase.

To that end, it can be concluded that the disappearance of this peak indicates the capacity of sample 2 to cause the degradation of the agents accountable for the bad odor when combined with the peroxide and soapy solution phases of the detergent composition of the present invention evaluated at room temperature.

### Preferred Embodiments

The present invention refers to a detergent for washing sports apparel having three different phases compartmentalized by means of a water-soluble film such that when the detergent contacts water, the film dissolves, allowing the reaction between the phases of the detergent, leading to a catalytic reaction which generates a percentage of active oxygen capable of oxidizing the molecules associated with bad odors emanating from used sports apparel.

The detergent of the invention incorporates oxidizing agents capable of transforming the thiols accountable for the bad odor into water-soluble sulfonates.

Additionally, the detergent incorporates disinfecting agents efficient for removing the population of skin bacteria present in clothing made of cotton and other acrylic fibers, which are accountable for the biotransformation of the fundamental sweat molecule that is secreted in the armpit, S-[1-(2-hydroxyethyl)-1-methylbutyl]-(L)-cysteinylglycine, also referred to as S-Cys-Gly-3M3SH, and plays a significant role in the bad odor when it is metabolized into free thioalcohol.

Therefore, the object of the invention is to provide a sustainable detergent with a high disinfecting and odor-removal capacity.

It is well known that the practice of sports among the population has increased in recent years in view of the significant benefits it has on human beings. This leads to an increase in the purchase of sportswear.

Indeed, users often complain of the difficulties in removing odor from their sportswear caused by sweat. In other words, a hard-to-overcome obstacle for removing bad odor when the sports apparel are washed with conventional detergents is detected.

The object of the detergent of the present invention is to overcome these drawbacks. The proposed detergent satisfactorily solves the problems set forth above based on a product, preferably by way of a capsule, in which there are differentiated at least:
- one catalyzing phase formed by a chitosan powder support impregnated with a manganese sulfate solution acting as a reaction catalyst upon contact with water,
- one phase of peroxide in solid state, and
- one Marseille-type neutral soap phase in solid state, preferably in the form of flakes.

The phase of Marseille-type neutral soap contains an amount comprised between 15 and 20 grams, the phase of sodium percarbonate in solid state contains between 0.5 and 2 grams, and the catalyzing phase contains an amount between 0.5 and 1.25 grams.

More specifically, the detergent of the invention is formed by at least three compartments, wherein each compartment is formed by a water-soluble film and separately contains each of the aforementioned phases.

Therefore, the compartments formed by the soluble film are attached to generate a detergent capsule in which the phases forming same are differentiated. Therefore, when the capsule is contacted with water, the film of the compartments dissolves and the catalyzing phase generates the catalytic activity upon contact with the peroxide, releasing a high percentage of active oxygen which allows the transformation of the malodorous molecules by oxidation. The contact of this medium with the soap already in a liquid solution from the third compartment completes the washing of the clothing.

The object of the present invention is to provide a detergent for cleaning sports apparel which is characterized by the emanation of a strong and persistent bad odor caused by sweat impregnating the clothing, generated by the user while practicing sports.

The catalyzing phase has been synthesized by impregnation from natural biopolymers originating from chitosan, in addition to other biopolymers such as carrageenans and gelatins. Chitosan, formed in chitin deacetylation and a constituent of the exoskeleton of crustaceans and insects, is a polysaccharide the monomer of which is glucosamine, which is a key factor as it has the capacity to absorb and form complexes with certain metal ions present in aqueous solutions due to the strong interaction with the protonated amino groups of the glucosamine units and metal ions.

Specifically, the catalyzing phase is prepared by wet impregnation, wherein the chitosan support is contacted with the impregnating solution, a manganese sulfate solution, for a specific time until the chitosan support is saturated with the solution. After that time, the excess liquid is removed by evaporation, obtaining the solid catalyzing phase of the detergent object of the invention.

Optionally, the manganese sulfate solution of the catalyzing phase used for impregnating the chitosan support has a concentration percentage in an interval between 2% and 10%.

The process of manufacturing detergent for washing sports apparel requires a careful preparation of the catalyzing phase, specifically the steps making up the process of manufacturing the catalyzing phase are as follows:
- Preparing a manganese sulfate solution with a preferred concentration between 2% and 10%,
- Preparing a chitosan solution in water at a concentration of 9.1%,
- Stirring the chitosan and water mixture at a speed of at least 10 rpm for at least 20 minutes and at a temperature between 70°C and 90°C,
- Adding the 5% manganese sulfate solution dropwise to the chitosan solution, maintaining the stirring and temperature conditions to obtain a chitosan support impregnated with manganese sulfate, wherein the manganese forms a complex with the functional groups of chitosan,
- Reducing the temperature of the chitosan support impregnated with manganese sulfate to 60°C while maintaining stirring and until the obtained support is dry, finally resulting in the catalyzing phase.

Additionally, a phase of peroxide in solid state and a solid phase of Marseille-type natural soap are prepared.

Optionally, the phase corresponding to the peroxide may consist of sodium carbonate peroxyhydrate, also referred to as sodium percarbonate.

Each of the three prepared phases is introduced in three different compartments each demarcated by a water-soluble film. Finally, the compartments are attached to generate a detergent capsule.

Based on the tests performed, it can be inferred that the prepared samples have a high catalytic capacity generating a significant percentage of active oxygen for the removal of thiol molecules oxidized into water-soluble sulfonates.

An example of the presentation format of the developed invention can be observed Figure 1, wherein the detergent capsule (5) is preferably formed by three compartments, wherein each compartment independently stores each of the three phases: a phase containing the catalyst (1), a phase containing sodium percarbonate powder (2), and a third phase of Marseille-type natural soap (3).

Preferably, the phase of Marseille-type natural soap (3) contains an amount of 18 grams, the phase of sodium percarbonate in solid state (2) contains 1 gram, and the catalyzing phase (1) contains 0.75 grams.

It must be pointed out that manganese sulfate solutions were prepared during the tests, wherein concentrations of this salt in percentages of 2.5%, 5%, 7.5%, and 10% were used.

The tests demonstrated that the optimum manganese sulfate concentration value was 5%, achieving active oxygen formation times suitable for the washing process with minimum Mn²⁺ concentrations in the system.

## Claims

1. A composition comprising a combination of at least:
a) one catalyzing phase A comprising a biopolymer matrix impregnated with an aqueous solution of a transition metal salt,
b) one phase B comprising a peroxide, and
c) one phase C comprising soap;
wherein the catalyzing phase A is physically separated from phase B.

2. The composition according to claim 1, comprising a combination of at least:
a) one catalyzing phase A formed by a chitosan powder support impregnated with a manganese sulfate solution,
b) one phase B of peroxide in solid state, and
c) one phase C of a solid natural soap-based component,
wherein each of phases are separated from one another.

3. The composition according to claim 1, wherein the catalyzing phase A is physically separated from phase B and phase C, preferably each of phases A, B, and C are physically separated from one another.

4. The composition according to claims 1 and 3, wherein the polymer matrix is formed by a biopolymer selected from chitosan, gelatins, carrageenan, gellan gum, and mixtures thereof, preferably chitosan.

5. The composition according to any of claims 1, 3 and 4, wherein the biopolymer matrix is a chitosan matrix, wherein the transition metal salt is manganese sulfate, and wherein the peroxide is sodium percarbonate.

6. The composition according to any of claims 1 and 3 to 5, wherein the soap is a neutral soap, preferably Marseille soap.

7. The composition according to claim 1, wherein the transition metal salt is manganese sulfate, wherein the peroxide is a peroxide in solid state, wherein the soap is Marseille soap, and wherein each of phases A, B, and C are physically separated from one another.

8. The composition according to any of claims 1 and 3 to 7, wherein all the phases are solid.

9. The composition according to any of claims 1 and 3 to 8, comprising:
a) from 2% to 6% of catalyzing phase A,
b) from 2% to 9% of phase B, and
c) from 85% to 96% of phase C.

10. The composition according to any of claims 1 and 3 to 9, comprising:
a) from 3% to 5% of catalyzing phase A,
b) from 4% to 6% of phase B, and
c) from 89% to 93% of phase C.

11. A capsule comprising two or three compartments, wherein said compartments are made of a water-soluble film (4) and wherein the compartments together form said capsule; **characterized in that** said capsule contains the composition according to any of claims 1 to 10, wherein the catalyzing phase A is physically separated from phase B.

12. The capsule according to claim 11, comprising at least three compartments, wherein said compartments are made of a water-soluble film (4) separately containing each of the phases, such that the compartments are attached to generate a capsule (5) in which the three phases are differentiated, and wherein the capsule is a detergent capsule for washing sports apparel.

13. The capsule according to the claim 11, wherein the catalyzing phase A is physically separated from phase B and phase C.

14. The capsule according to any of claims 11 and 13, comprising three compartments.

15. The capsule according to claim 14, wherein each of the three phases A (1), B (2), and C (3) is located in a different compartment of the capsule (5).

16. The capsule according to any of claims 11 and 13 to 15, comprising:
a) from 0.5 g to 1.25 g of catalyzing phase A,
b) from 0.5 g to 2 g of phase B, and
c) from 15 g to 20 g of phase C.

17. A method for preparing a composition according to any of claims 1 to 10, comprising the steps of:
a)preparing a catalyzing phase A which comprises
i. preparing an aqueous solution of a transition metal salt, preferably manganese sulfate,
ii. preparing an aqueous suspension of a biopolymer matrix, preferably a chitosan matrix,
iii. stirring the aqueous suspension of the biopolymer matrix at a temperature of at least 50°C and adding the aqueous solution of the transition metal salt, and
iv. maintaining stirring and a temperature of at least 50% until the water evaporates;
b)providing a phase B comprising a peroxide, preferably sodium percarbonate;
c)providing a phase C comprising soap; and
d)combining the three phases, providing that the catalyzing phase A does not interact with phase B.

18. The method for preparing a composition according to claim 17, comprising the following steps:
a) preparing a catalyzing phase A which comprises
i. preparing a manganese sulfate solution with a concentration between 2 and 10%,
ii. preparing a chitosan solution in water at a concentration of 9.1%,
iii. stirring the chitosan and water mixture at a speed of at least 10 rpm for at least 20 minutes and at a temperature between 70°C and 90°C, and adding the prepared manganese sulfate solution dropwise to the chitosan solution, maintaining the stirring and temperature conditions to obtain a chitosan support impregnated with manganese sulfate, wherein the manganese forms a complex with the functional groups of chitosan, and
iv. maintaining stirring and the temperature up to 60°C of the chitosan support impregnated with manganese sulfate while the stirring is going on and until the obtained support is dry, resulting in the catalyzing phase.
b) preparing a phase B of peroxide in solid state,
c) preparing a solid phase C of neutral soap,
wherein the composition is a washing detergent for sports apparel.

19. The method for preparing a capsule according to any of claims 11 to 16, comprising the steps of:
a) providing two or three compartments made of a water-soluble film,
b) introducing the phases A, B, and C in the compartments, wherein the catalyzing phase A does not interact physically with phase B, and
c) attaching the compartments to form the capsule.

20. The method for preparing a capsule according to claim 19, comprising the following steps:
a) providing three different compartments, each compartment being formed by a water-soluble film,
b) introducing each prepared phase in the compartments, and
c) attaching the compartments to generate a detergent capsule.

21. The method according to claim 19, wherein each phase A, B, and C is introduced in a different compartment.

22. A method for cleaning clothing which comprises treating the clothing to be cleaned with the composition according to any of claims 1 to 10 or with the capsule according to any of claims 11 to 16.

23. Use of the composition according to any of claims 1 to 10 or of the capsule according to any of claims 11 to 16 as a detergent for clothing.

24. Use according to claim 23 as a detergent for sportswear.
